# EUROPÄISCHE PATENTSCHRIFT

(11) **EP 1 328 414 B1**
(45) Veröffentlichungstag und Bekanntmachung des Hinweises auf die Patenterteilung: **17.05.2006**
(21) Anmeldenummer: 01988660.5
(22) Anmeldetag: 22.10.2001
(51) Int. Cl.: B60J 5/04, B60J 10/04

(54) **KRAFTFAHRZEUGTÜR**
MOTOR VEHICLE DOOR
PORTIERE D'AUTOMOBILE

(30) Priorität: 25.10.2000 DE 10052739
(43) Veröffentlichungstag der Anmeldung: 23.07.2003
(73) Patentinhaber: Brose Fahrzeugteile GmbH & Co. KG, Coburg, 96450 Coburg (DE)
(72) Erfinder: FLORENTIN, Thierry, 96450 Coburg (DE); GERSTLAUER, Ralph, 96450 Coburg (DE)
(74) Vertreter: Baumgärtel, Gunnar
(86) Internationale Anmeldenummer: PCT/DE2001/004035
(87) Internationale Veröffentlichungsnummer: WO 2002/034556

(56) Entgegenhaltungen:
- EP-A- 1 040 951
- EP-A- 1 138 535
- DE-A- 19 509 282
- DE-A- 19 622 310
- DE-A- 19 738 656
- DE-C- 19 511 105

## Beschreibung

Die Erfindung bezieht sich auf eine Kraftfahrzeugtür mit einer Naß/Trockenraumtrennung, die auf seiten der Türaußenschale einen Naßraum von einem Trockenraum auf seiten der Türinnenverkleidung trennt, gemäß dem Oberbegriff des Patentanspruchs 1.

Aus DE 94 08 653 U1, DE 195 09 282 A1, DE 195 11 105 C1, DE 196 22 310 A1, DE 197 38 656 A1, DE 199 15 151 A1, DE 199 44 965 A1 und EP 0 684 157 A1 sind Kraftfahrzeugtüren der gattungsgemäßen Art bekannt. Die Türinnenschalen besitzen eine großflächige Montageöffnung, die durch eine mit Funktionselementen bestückten Trägerplatte verschließbar ist. Um eine - auch gegenüber Druckunterschieden zwischen dem Naß- und dem Trockenraum - wirksame Andichtung zu erreichen, ist eine umlaufende Dichtschnur vorgesehen, die sich entlang der Kontur der Öffnung in der Türinnenschale erstreckt. Eine derartige Türkonstruktion erlaubt eine Vormontage und Vorprüfung der Funktionselemente (z.B. Fensterheber, Schloß, Steuerelektronik, elektrische Steckverbinder u.a.), bevor diese mit der Trägerplatte in die Türkarosserie eingesetzt werden. Durch die Anordnung der Funktionselemente auf der Trockenraumseite kann auf einen aufwendigen Feuchtigkeitsschutz verzichtet werden. In einem vergleichsweise geringen Abstand zum oberen, im wesentlichen horizontal verlaufenden Dichtungsbereich zwischen der Trägerplatte und der Türinnenschale erstreckt sich eine innere Schachtdichtung, die das Eindringen von Feuchtigkeit in den Fahrgastinnenraum verhindern soll.

Eine Schachtdichtung mit einem integrierten Verstärkungselement für den Brüstungsbereich ist in US 5,544,448 beschrieben. Dazu weist das Verstärkungselement einen klammerartigen Befestigungsbereich auf, der das obere Ende der Türinnenschale umgreift. Auf der Naßraumseite der Türinnenschale setzt sich das Blech des Verstärkungselements nach unten bis zu einer Kehre fort, um schließlich ein geschlossenes Profil zu bilden. Ein sich daran anschließender Schenkel trägt die der Scheibeninnenseite zugewandten Dichtlippen der Schachtdichtung.

Der Erfindung liegt die Aufgabe zugrunde, eine Kraftfahrzeugtür mit einer Türinnenschale, einer damit verbundenen Türaußenschale und einer großflächigen Montageöffnung in der Türinnenschale, die durch eine mit Funktionselementen bestückten Trägerplatte dichtend abdeckbar ist, zu entwickeln, die auch bei verringertem Dichtungsaufwand hohe Ansprüche an die Naß-/Trockenraumtrennung erfüllt.

Erfindungsgemäß wird die Aufgabe dadurch gelöst, daß die den oberen Abschluß des inneren Brüstungsbereichs bildende Schachtdichtung von der oberen Kontur der Trägerplatte getragen wird, wobei die Enden der Schachtdichtung mit den seitlichen Dichtungsbereichen der Trägerplatte in Verbindung stehen. Damit entsteht eine geschlossene, ununterbrochene Dichtungskontur. Der obere, von der Schachtdichtung gebildete Dichtungsbereich übernimmt also auch die Abdichtung zwischen der Türinnnenschale und der Trägerplatte. Im allgemeinen kann der übliche konstruktive Aufbau der Schachtdichtung beibehalten werden, bei der ein klammernartiger Befestigungsbereich mit Metalleinlage den oberen Randbereich der Trägerplatte umgreift und einen seitlich abstehenden Bereich aufweist, der die der Scheibeninnenseite zugeordnete Dichtlippen trägt.

Nach einer Ausführungsvariante der Erfindung weist die Türinnenschale im Brüstungsbereich die gesamte innenseitige Schachtverstärkung auf und die obere Kontur der Trägerplatte erstreckt sich im wesentlichen entlang der oberen Kontur des Brüstungsbereichs der Türinnenschale. Die Schachtdichtung umgreift dabei sowohl die obere Kontur von Trägerplatte und als auch die obere Kontur der Türinnenschale.

Eine weitere Erfindungsvariante sieht vor, daß die Türinnenschale im Brüstungsbereich einen oberen Teil der innenseitigen Schachtverstärkung und die Trägerplatte einen unteren Teil der innenseitigen Schachtverstärkung aufweist. Auch in diesem Fall bilden die oberen Konturen von Trägerplatte und Türinnenschale einen gemeinsamen Abschluß, der vom Befestigungsbereich der Schachtdichtung umgriffen wird. Im umgekehrten Fall, wenn also die Türinnenschale im Brüstungsbereich den unteren Teil der innenseitigen Schachtverstärkung und die Trägerplatte den oberen Teil der innenseitigen Schachtverstärkung ausbildet, ist auch möglich, daß die Schachtdichtung ausschließlich mit der oberen Kontur der Trägerplatte in Verbindung steht. Eine solche Befestigung der Schachtdichtung ist jedenfalls dann erforderlich, wenn die Trägerplatte im Brüstungsbereich die gesamte innenseitige Schachtverstärkung ausbildet.

Die Schachtdichtung weist vorzugsweise oberhalb ihres Befestigungsbereichs eine Wulst auf, die der Einhängung der Türinnenverkleidung dient.

Die Dichtungsbereiche zwischen der Trägerplatte und den zugeordneten seitlichen Randbereichen und dem unteren Randbereich der Öffnung in der Türinnenschale können von einem durchgehenden Dichtungselement, z.B. in Form einer aufgespritzten oder aufgeklebten Dichtschnur, gebildet werden. Eine weitere Möglichkeit der Ausbildung der Dichtungsbereiche besteht im Aufkaschieren einer elastischen Dichtfolie auf die Trägerplatte, insbesondere in Form einer geschäumten Folie.

Die beschriebenen Trägerplatten sind in einfacher Weise als Stanz-Prägeteile aus Stahlblech oder einem anderen Blechmaterial herstellbar, wobei durch Präge- und/oder Biegevorgänge bei Bedarf auch eine Schachtverstärkung ausgeformt werden kann. Ein noch höherer Integrationsgrad kann mit einer Trägerplatte in Form eines Leichtmetall-Gußteils erzielt werden, da hiermit unter anderem auch Lagerstellen oder Befestigungselemente angeformt werden können, ohne eine die Naß-/Trockenraumtrennung durchdringende Öffnung erzeugen zu müssen.

Bei Verwendung einer Trägerplatte in Form eines Kunststoffspritzteils in Mehrkomponententechnik, besteht auch die Möglichkeit, die Schachtdichtung mittels einer hinreichend flexiblen Kunststoffkomponente auszubilden und einstückig in die Trägerplatte zu integrieren. Darüber hinaus können auch die übrigen an der Trägerplatte vorgesehenen Dichtungsbereiche (der untere und die seitlichen Dichtungsbereiche zwischen der Trägerplatte und den zugeordneten Randbereichen der Öffnung in der Türinnenschale) einstückig in die Trägerplatte integriert werden.

Nachfolgend wird die Erfindung anhand von Ausführungsbeispielen sowie der dargestellten Figuren näher erläutert. Es zeigen:
- Figur 1a: schematische Ansicht einer Türinnenschale, einer Trägerplatte und einer innenseitigen Schachtdichtung in Explosivdarstellung;
- Figur 1b: schematische Ansicht des Zusammenbaus der Teile gemäß Figur 1 a;
- Figur 1c: schematische Ansicht des Zusammenbaus der Teile gemäß Figur 1a von seiten der Tägerplatte;
- Figur 1d: schematische Ansicht der Stirnseite des Zusammenbaus der Teile gemäß Figur 1 a;
- Figur 2: Schnittdarstellung durch eine Fahrzeugtür im Bereich der großflächigen Öffnung in der Türinnenschale;
- Figur 3: schematische Explosivdarstellung einer Türinnenschale mit einer Brüstungsverstärkung, die bis in den Bereich der Schachtdichtung reicht;
- Figur 4: schematische Explosivdarstellung einer Türinnenschale mit einer Brüstungsverstärkung, die nicht bis in den Bereich der Schachtdichtung reicht;
- Figur 5: schematische Explosivdarstellung einer Türinnenschale ohne Brüstungsverstärkung;
- Figur 6: perspektivische Darstellung einer Kraftfahrzeugtür mit einem Rahmenmodul, das von oben in den aus Türinnenschale und Türaußenschale bestehenden Türkasten einsteckbar ist.

Das neue Türkonzept, wonach die obere Kontur 200 der die in der Türinnenschale 1, 1', 1" vorgesehene Montageöffnung 111 abdeckenden Trägerplatte 2, 2', 2" die Schachtdichtung 3 trägt, erlaubt im Vergleich zu bekannten Türkonzepten mit einer sogenannten Naß-/Trockenraumtrennung einen verringerten Dichtungsaufwand, da die Schachtdichtung 3 gleichzeitig die Aufgabe der Abdichtung der Trägerplatte 2, 2', 2" gegenüber der Türinnenschale 1, 1', 1" übernimmt. Der entsprechende, sonst notwendige Dichtungsstreifen in diesem Bereich kann also entfallen. Dadurch wird Material und Herstellungsaufwand eingespart. Darüber hinaus steht durch die hochgezogene Kontur der Trägerplatte zumindest dann eine vergrößerte Montagefläche für diverse vormontierbare Funktionseinheiten zur Verfügung, wenn der Brüstungsbereich der Türinnenschale nach oben hin schmaler ausgeführt oder durch eine in der Trägerplatte integrierte Brüstungsverstärkung völlig ersetzt wird.

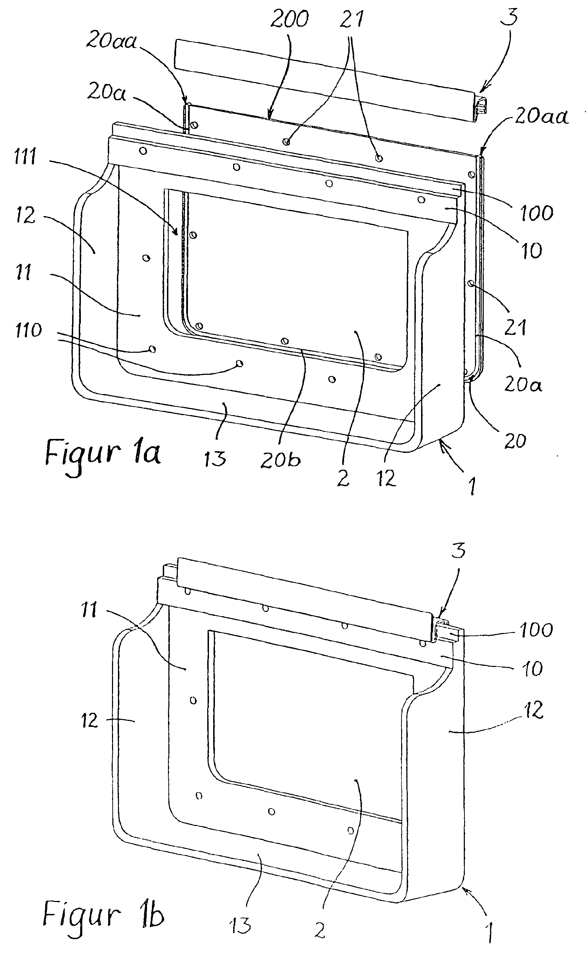

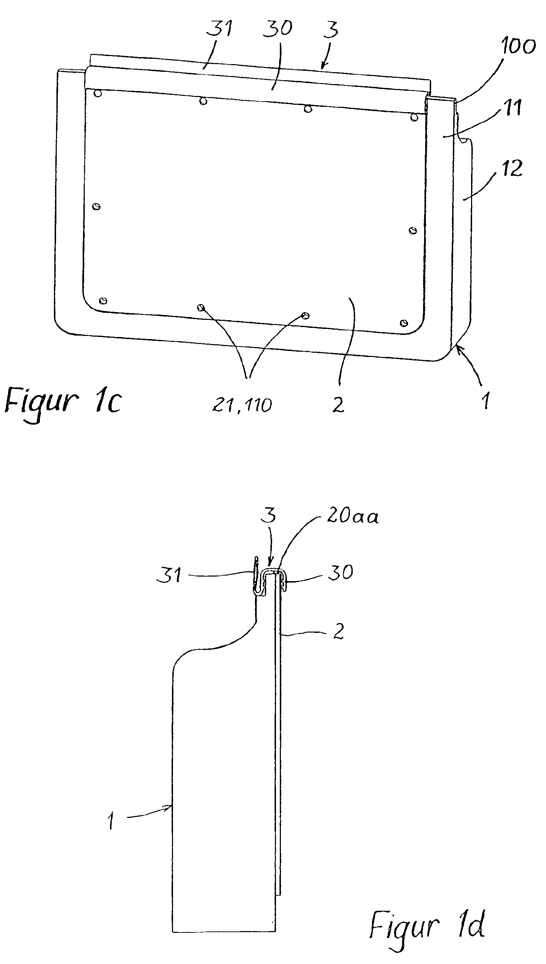

Das in den Figuren 1a - 1 d schematisch dargestellte Türkonzept zeigt eine Türinnenschale 1, die auch als Leichtmetall-Gußteil (z.B. aus einer Aluminium- oder Magnesiumlegierung) ausgeführt sein kann, von seiten der Türinnenschale, die nicht dargestellt ist. Die Türinnenschale besteht im wesentlichen aus einer dem Fahrgastraum zugewandten Innenwand, die eine großflächige Montageöffnung 111 und - im oberen Bereich - eine Brüstungsverstärkung 10 mit einem stegartigen Abschluß (Steg 100) aufweist. Seitlich abgewinkelt von der Innenwand 11 erstrecken sich der Türboden 13 und die Seitenwände 12, an den die (nicht dargestellten) Türscharniere und das Schloß angeschlagen sind. Der Innenwand 11 zugeordnet ist eine Trägerplatte 2, welche die Öffnung 111 vollständig abdecken kann und die an ihrem unteren Rand sowie an den seitlichen Rändern eine Dichtung 20a, 20b trägt. Die seitlichen Ränder 20a enden auf der Oberkante der Trägerplatte 1 in einem der Schachtdichtung 3 zugeordneten Endbereich 20aa. Über die Befestigungsöffnungen 21, 110 wird die Verbindung zwischen der Türinnenschale 1 und der Trägerplatte 2 durch Schauben oder Nieten hergestellt.

Anschließend kann die innere Schachtdichtung 3 montiert werden. Ihr U-förmiger Befestigungsbereich 30 umgreift dabei die oberen Konturen 100, 200 von Türinnenschale 1 und Trägerplatte 2 (siehe insbesondere Figur 1d), wobei die innere Basisfläche des U-förmigen Befestigungsbereichs 30 mit den Endbereichen 20aa der seitlichen Dichtungsbereiche 20a der Trägerplatte 2 in Kontakt tritt und somit eine geschlossene Dichtung bildet, die hohen Anforderungen an die Naß-/Trockenraumtrennung genügt.

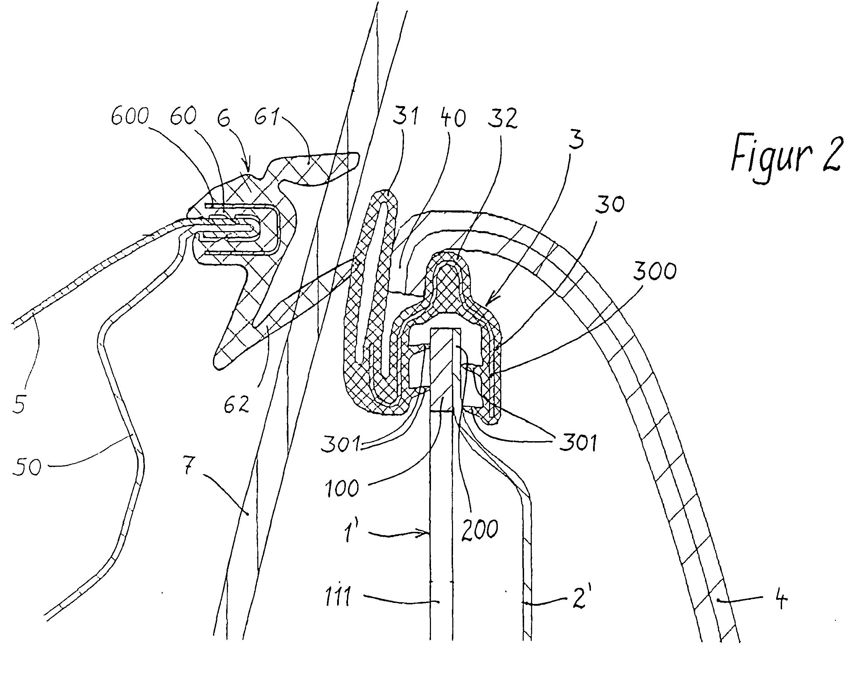

Der in Figur 2 dargestellte Ausschnitt des Brüstungsbereichs einer Fahrzeugtür entspricht dem Türkonzept gemäß den Figuren 1a - 1d und zeigt - neben weiteren Details der inneren Schachtdichtung 3 - auch die äußere Schachtdichtung 6, die von einem durch die Türaußenschale 5 und einer damit verbörtelten äußeren Brüstungsverstärkung 50 gebildeten Endbereich getragen wird. Der Befestigungsbereich 60 der Schachtdichtung 6 weist eine U-förmige Metallklammer 600 auf, welche die notwendigen Haltekräfte erzeugt. Zwei angeformte Dichtlippen 61, 62 dienen der Anlage an die äußere Scheibenfläche.

Die innere Schachtdichtung 3 weist im Befestigungsbereich 30 ebenfalls eine Metallklammer 300 auf, deren Form jedoch so gewählt wurde, daß der eine Endbereich der Metallklammer 600 auch die zur Anlage an die innere Fläche der Fensterscheibe 7 vorgesehene Dichtlippe 31 tragen kann. Darüber hinaus ist an der Basis des im wesentlichen U-förmigen Befestigungsbereichs 30 eine nach oben weisende Wulst 32 ausgebildet, die der Einhängung des Endes 40 der Türinnenverkleidung 4 dient. Im Inneren des Befestigungsbereichs 30 wurde das Dichtungsmaterial zu Dichtlippen 301 ausgeformt, die an den oberen Konturen 100, 200 von Türinnenschale 1' und Trägerplatte 2' anliegen.

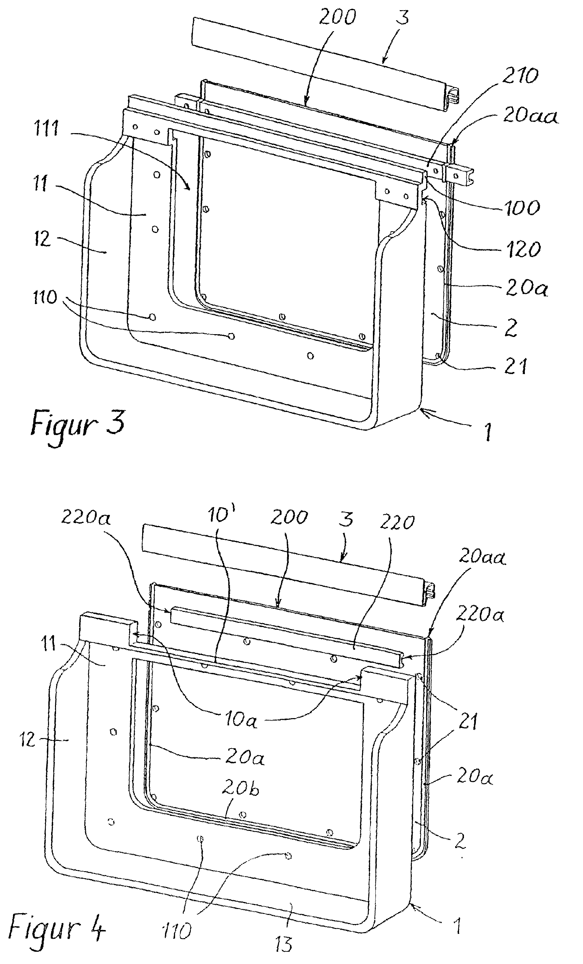

Das Türkonzept von Figur 3 zeigt eine Türinnenschale 1 mit einer reduzierten inneren Brüstungsverstärkung, die nach oben hin mit dem Steg 100 abschließt. Nach unten hin erfolgt eine Ergänzung durch eine mit der Trägerplatte 2 verbundene Brüstungsverstärkung 210, die sich mit ihren über die seitlichen Ränder der Trägerplatte 2 hinausragenden Enden in die kanalförmige Ausnehmung 120 der Türinnenschale 1 einfügen läßt. Der seitliche Dichtungsbereich 20a erstreckt sich dabei auch über die Brüstungsverstärkung 210 und endet auf der Stirnkante 200 der Trägerplatte 2, so daß nach der Montage der Schachtdichtung 3 sichergestellt ist, daß diese mit der Dichtung 20a, 20aa der Trägerplatte 2 in Verbindung steht. Die Schachtdichtung 3 umgreift analog zu den in den Figuren 1a - 2 beschriebenen Ausführungsbeispielen mit ihrem Befestigungsbereich 30 die oberen Konturen der Türinnenschale 1 und der Trägerplatte 2.

Figur 4 zeigt ein Türkonzept mit einer auf der Trägerplatte 2 angeordneten Brüstungsverstärkung 220, die mit ihren äußeren Stirnflächen 220a zwischen die inneren Stirnflächen 10a der seitlichen Holme 11, 12 eingesetzt wird. Unterhalb dieser Brüstungsverstärkung 220 befindet sich eine Brüstungsverstärkung 10', die die Holme 11, 12 der Türinnenschale 1 verbindet. Im vorliegenden Fall überragt die obere Kontur 200 der Trägerplatte 2 sämtliche Bereiche der Türinnenschale 1 und trägt deshalb die Schachtdichtung 3 allein. Somit ist grundsätzlich auch eine Vormontage der Schachtdichtung 3 auf der Trägerplatte 2 vor den Zusammenbau der Tür möglich.

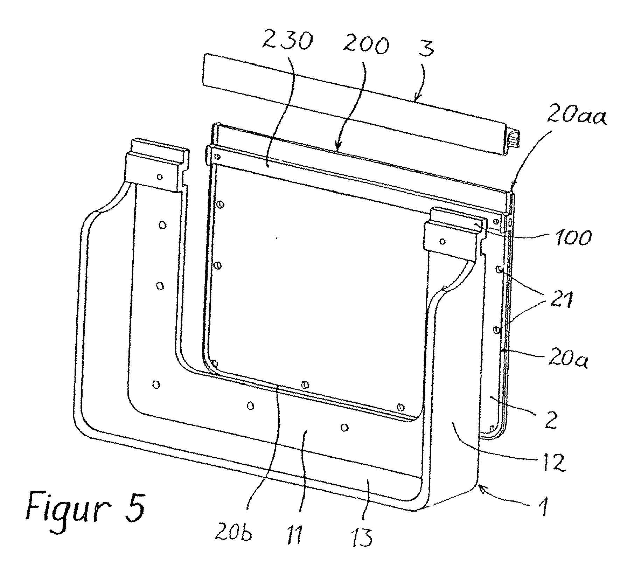

Das in Figur 5 dargestellte Türkonzept unterscheidet sich von dem gemäß Figur 4 im wesentlichen nur dadurch, daß die Türinnenschale 1 keinerlei Brüstungsverstärkung aufweist und daß sich die Brüstungsverstärkung 230 der Trägerplatte 2 über die gesamte Breite der Trägerplatte 2 erstreckt. Auch in diesem Fall bildet die obere Kontur 200 der Trägerplatte 2 den Abschluß der Naß-/Trockenraumtrennung und trägt die Schachtdichtung 3.

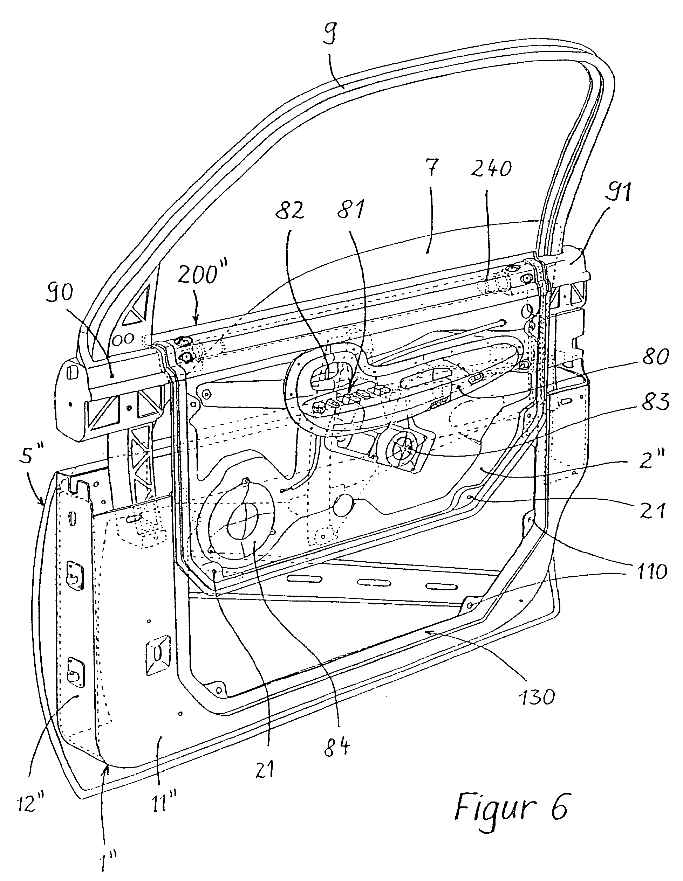

Figur 6 zeigt die perspektivische Darstellung einer Kraftfahrzeugtür mit einem Rahmenmodul gemäß dem prinzipiellen Türkonzept von Figur 5. Die Türkarosserie wird von einem aus der Türaußenschale 5" und der Türinnenschale 1" gebildeten, nach oben offenen Türkasten gebildet, in den das Rahmenmodul einsteckbar und montierbar ist. Der Fensterrahmen 9 sowie die Trägerplatte 2" stehen über sogenannte Knotenelemente 90, 91 miteinander in Verbindung, wobei die Knotenelemente 90, 91 der Justierung des Rahmens 9 bezüglich des Türkastens 1", 5" und der Montage dienen. Zur Verbindung der Trägerplatte 2" mit der Innenwand 11" der Türinnenschale 1" sind entlang des Dichtungsbereichs 130 Befestigungsstellen 21, 110 vorgesehen.

Der Brüstungsbereich der Tür wird von einer rohrförmigen Brüstungsverstärkung 240 gebildet, die über bolzenartige Zapfen mit den Knotenelementen 90, 91 in Verbindung steht. Daran ist die Trägerplatte 2" befestigt, deren oberer Bereich an die gewünschte Kontur der Brüstung angepaßt wurde und der die Brüstungsverstärkung 240 teilweise umschließt. Die abschließende obere Kontur 200" der Trägerplatte 2" wird von einem nach oben abgewinkelten Randbereich gebildet, der die (nicht dargestellte) innere Schachtdichtung 3 trägt.

Die Trägerplatte 2" stellt mit den vormontierten Funktionseinheiten eine vorprüfbare Einheit dar, wodurch ein hoher Qualitätsstandard sichgestellt werden kann. Solche Funktionseinheiten können z.B. sein: eine Armstütze (80), eine Schaltereinheit (81) zum Ansteuern von elektrisch antreibbaren Fensterhebern oder Spiegeln, eine Antriebseinheit (83) für einen Fensterheber, ein Türinnenöffner (82), ein Lautsprecher (84) oder ein Kabelbaum. Eine Anordnung der Funktionseinheiten auf der Trockenraumseite erlaubt erhebliche Einsparungen durch die Vermeidung von ansonsten notwendigen Naßraumausführungen.

## Patentansprüche

1. Kraftfahrzeugtür
• mit einer Türinnenschale (1, 1', 1") und einer damit verbundenen Türaußenschale (5"),
• mit einer großflächigen Öffnung (111) in der Türinnenschale (1,1',1"), die durch eine Trägerplatte (2, 2") mittels eines Dichtungsbereichs (2a, 2b) dichtend abdeckbar ist, und
• mit einer Schachtdichtung (3), welche den oberen Abschluß des inneren Brüstungsbereichs bilden,
**dadurch gekennzeichnet,**
**daß** die obere Kontur (200, 200") der Trägerplatte (2, 2") die Schachtdichtung (3) trägt, deren Enden mit den seitlichen Dichtungsbereichen (2a, 2aa) der Trägerplatte (2, 2") in Verbindung stehen.

2. Kraftfahrzeugtür nach Anspruch 1, **dadurch gekennzeichnet, daß** die Türinnenschale (1) im Brüstungsbereich die gesamte innenseitige Schachtverstärkung (10) aufweist.

3. Kraftfahrzeugtür nach Anspruch 1, **dadurch gekennzeichnet, daß** die Türinnenschale (1) im Brüstungsbereich einen oberen Teil der innenseitigen Schachtverstärkung (100) und die Trägerplatte (2) einen unteren Teil der innenseitigen Schachtverstärkung (210) aufweist oder umgekehrt.

4. Kraftfahrzeugtür nach Anspruch 2 oder 3, **dadurch gekennzeichnet, daß** sich die obere Kontur der Trägerplatte (1) im wesentlichen entlang der oberen Kontur (100) des Brüstungsbereichs der Türinnenschale (1) erstreckt und daß die Schachtdichtung (3) die oberen Konturen (100, 200) von Trägerplatte (2, 2') und Türinnenschale (1, 1') umgreift.

5. Kraftfahrzeugtür nach Anspruch 1, **dadurch gekennzeichnet, daß** die Trägerplatte (1, 1") im Brüstungsbereich die gesamte innenseitige Schachtverstärkung (230, 240) aufweist.

6. Kraftfahrzeugtür nach einem der voranstehenden Ansprüche, **dadurch gekennzeichnet, daß** die Schachtdichtung (3) eine metallische, federelastisch ausgebildete Klammer (300) aufweist, die ihrer Befestigung dient.

7. Kraftfahrzeugtür nach einem der voranstehenden Ansprüche, **dadurch gekennzeichnet, daß** an der Schachtdichtung (3) oberhalb ihres Befestigungsbereichs (30) eine Wulst (32) ausgebildet ist, die der Einhängung der Türinnenverkleidung (4) dient.

8. Kraftfahrzeugtür nach einem der voranstehenden Ansprüche, **dadurch gekennzeichnet, daß** der untere Dichtungsbereich (20b) und die seitlichen Dichtungsbereiche (20a, 20aa) zwischen der Trägerplatte (2) und den zugeordneten Randbereichen der Öffnung (111) in der Türinnenschale (1) von einem durchgehenden Dichtungselement, z.B. einer aufgespritzten oder aufgeklebten Dichtschnur, gebildet wird.

9. Kraftfahrzeugtür nach einem der voranstehenden Ansprüche, **dadurch gekennzeichnet, daß** der untere Dichtungsbereich und die seitlichen Dichtungsbereiche zwischen der Trägerplatte (2, 2") und den zugeordneten Randbereichen der Öffnung (111) in der Türinnenschale (1, 1 ") von einer auf die Trägerplatte aufkaschierten elastischen Dichtfolie, insbesondere in Form einer geschäumten Folie, gebildet wird.

10. Kraftfahrzeugtür nach Anspruch 1, **dadurch gekennzeichnet, daß** die Trägerplatte als Kunststoffspritzteil in 2-Komponententechnik ausgeführt ist, wobei die Schachtdichtung mittels der weicheren Kunststoffkomponente ausgebildet und einstückig in die Trägerplatte integriert ist.

11. Kraftfahrzeugtür nach Anspruch 1, **dadurch gekennzeichnet, daß** auch der untere Dichtungsbereich und die seitlichen Dichtungsbereiche zwischen der Trägerplatte und den zugeordneten Randbereichen der Öffnung in der Türinnenschale einstückig in die Trägerplatte integriert sind.

12. Kraftfahrzeugtür nach Anspruch 1, **dadurch gekennzeichnet, daß** die Trägerplatte (2) als Leichtmetall-Gußteil aus einer Aluminium- oder Magnesiumlegierung ausgeführt ist.

13. Kraftfahrzeugtür nach Anspruch 1, **dadurch gekennzeichnet, daß** die Trägerplatte (2, 2") als Blechteil ausgeführt ist, insbesondere als Stanz-Prägeteil.

## Claims

1. Motor vehicle door
• with a door inner shell (1, 1', 1") and a door outer shell (5") connected thereto
• with a large area opening (111) in the door inner shell (1, 1', 1") which can be sealingly covered by a support plate (2, 2") by means of a sealing area (2a, 2b), and
• with a channel seal (3) which forms the upper closure of the inner ledge area
**characterised in that**
the upper contour (200, 200") of the support plate (2, 2") supports the channel seal (3) whose ends are connected to the side sealing areas (2a, 2aa) of the support plate (2, 2").

2. Motor vehicle door according to claim 1 **characterised in that** the door inner shell (1) has in the ledge area the complete inside shaft reinforcement (10).

3. Motor vehicle door according to claim 1 **characterised in that** the door inner shell (1) has in the ledge area an upper part of the inside shaft reinforcement (100) and the support plate (2) has a lower part of the inside shaft reinforcement (210), or vice versa.

4. Motor vehicle door according to claim 2 or 3 **characterised in that** the upper contour of the support plate (1) extends substantially along the upper contour (100) of the ledge area of the door inner shell (1) and that the channel seal (3) engages round the upper contours (100, 200) of the support plate (2, 2') and door inner shell (1, 1').

5. Motor vehicle door according to claim 1 **characterised in that** the support plate (1, 1';') has in the ledge area the complete internal shaft reinforcement (230, 240).

6. Motor vehicle door according to one of the preceding claims **characterised in that** the channel seal (3) has a metal spring- elastic clip (300) which serves for fixing.

7. Motor vehicle door according to one of the preceding claims **characterised in that** a bead (32) is formed on the channel seal (3) above its fixing area (30) and serves for mounting the door inside trim panel (4).

8. Motor vehicle door according to one of the preceding claims **characterised in that** the lower sealing area (20b) and the side sealing areas (20a, 20aa) between the support plate (2) and the associated edge areas of the opening (111) in the door inner shell (1) is formed by a continuous sealing element e.g. an injection moulded or stuck- on sealing cord.

9. Motor vehicle door according to one of the preceding claims **characterised in that** the lower sealing area and the side sealing areas between the support plate (2, 2") and the associated edge areas of the opening (111) in the door inside shell (1, 1") is formed by an elastic sealing foil, more particularly in the form of a foamed foil, which is used to line the support plate.

10. Motor vehicle door according to claim 1 **characterised in that** the support plate is designed as an injection moulded part using 2-component technology whereby the channel seal is formed by means of the softer plastics component and is integrated in one piece into the support plate.

11. Motor vehicle door according to claim 1 **characterised in that** the lower sealing area and the side sealing areas between the support plate and the associated edge areas of the opening in the door inner shell are integrated in one piece into the support plate.

12. Motor vehicle door according to claim 1 **characterised in that** the support plate (2) is formed as a light metal cast part of aluminium or magnesium alloy.

13. Motor vehicle door according to claim 1 **characterised in that** the support plate (2, 2') is designed as a sheet metal part, more particularly as a stamped part.

## Revendications

1. Portière de véhicule automobile
• avec une coque intérieure de portière (1, 1', 1") et une coque extérieure de portière raccordée à celle-ci (5"),
• avec une ouverture de grande surface (111) dans la coque intérieure de portière (1, 1', 1") qui est recouverte de façon étanche par une plaque de support (2, 2") au moyen d'une zone d'étanchéité (2a, 2b), et
• avec une étanchéité de puits (3) qui forme l'obturation supérieure d'une zone intérieure d'appui,
**caractérisée en ce que**
le contour supérieur (200, 200") de la plaque de support (2, 2") supporte l'étanchéité de coque (3) dont les extrémités sont en contact avec les zones d'étanchéité latérales (2a, 2aa) de la plaque de support (2, 2").

2. Portière de véhicule automobile selon la revendication 1, **caractérisée en ce que** la coque intérieure de portière (1) présente, dans la zone d'appui, la totalité du renfort de puits interne (10).

3. Portière de véhicule automobile selon la revendication 1, **caractérisée en ce que** la coque intérieure de portière (1) présente, dans la zone d'étanchéité, une partie supérieure du renfort de puits interne (100), et la plaque de support (2) présente une partie inférieure du renfort d'étanchéité interne (210) ou vice versa.

4. Portière de véhicule automobile selon la revendication 2 ou 3, **caractérisée en ce que** le contour supérieur de la plaque de support (1) s'étend sensiblement le long du contour supérieur (100) de la zone d'appui de la coque intérieure de portière (1), et **en ce que** l'étanchéité de puits (3) enserre les contours supérieurs (100, 200) de la plaque de support (2, 2') et la coque intérieure de portière (1, 1').

5. Portière de véhicule automobile selon la revendication 1, **caractérisée en ce que** la plaque de support (1, 1") présente, dans la zone d'appui, la totalité du renfort de puits interne (230, 240).

6. Portière de véhicule automobile selon l'une des revendications précédentes, **caractérisée en ce que** l'étanchéité de puits (3) présente une agrafe (300) métallique de configuration élastique à ressort qui sert à sa fixation.

7. Portière de véhicule automobile selon l'une des revendications précédentes, **caractérisée en ce que** sur l'étanchéité de puits (3), au-dessus de sa zone de fixation (30), est formé un bourrelet (32) qui sert à l'accrochage de l'habillage interne de portière (4).

8. Portière de véhicule automobile selon l'une des revendications précédentes, **caractérisée en ce que** la zone d'étanchéité inférieure (20b) et les zones d'étanchéité latérales (20a, 20aa) entre la plaque de support (2) et les zones marginales correspondantes de l'ouverture (111) dans la coque intérieure de portière (1) sont formées par un élément d'étanchéité continu, par exemple un cordon d'étanchéité appliqué par pulvérisation ou par collage.

9. Portière de véhicule automobile selon l'une des revendications précédentes, **caractérisée en ce que** la zone d'étanchéité inférieure et les zones d'étanchéité latérales entre la plaque de support (2, 2") et les zones marginales correspondantes de l'ouverture (111) sont formées dans la coque interne de portière (1, 1") d'une feuille d'étanchéité élastique contrecollée sur la plaque de support, en particulier sous la forme d'une feuille en mousse.

10. Portière de véhicule automobile selon la revendication 1, **caractérisée en ce que** la plaque de support est exécutée en tant que pièce de pulvérisation de matière synthétique selon une technique à deux composants, dans laquelle l'étanchéité de puits est formée au moyen du composant plastique mou et est intégrée d'un seul tenant dans la plaque de support.

11. Portière de véhicule automobile selon la revendication 1, **caractérisée en ce qu'**aussi bien la zone d'étanchéité inférieure et les zones d'étanchéité latérales entre la plaque de support et les zones marginales correspondantes de l'ouverture dans la coque intérieure de portière sont intégrées d'un seul tenant dans la plaque de support.

12. Portière de véhicule automobile selon la revendication 1, **caractérisée en ce que** la plaque de support (2) est exécutée en une pièce de fonderie de métal léger à partir d'un alliage d'aluminium ou de magnésium.

13. Portière de véhicule automobile selon la revendication 1, **caractérisée en ce que** la plaque de support (2, 2") est réalisée en tant que pièce de tôlerie, en particulier en tant que pièce matricée ou estampée.
